## Europäisches Patentamt

(19) **European Patent Office**

**Office européen des brevets**

(11) Veröffentlichungsnummer: **0 162 305**

**B1**

(12) # EUROPÄISCHE PATENTSCHRIFT

(45) Veröffentlichungstag der Patentschrift:
**31.05.89**

(51) Int. Cl.⁴: **A 47 J 31/30**

(21) Anmeldenummer: **85104827.2**

(22) Anmeldetag: **20.04.85**

(54) **Espresso-Kaffeemaschine.**

(30) Priorität: **21.04.84 DE 3415204**

(43) Veröffentlichungstag der Anmeldung:
**27.11.85 Patentblatt 85/48**

(45) Bekanntmachung des Hinweises auf die Patenterteilung:
**31.05.89 Patentblatt 89/22**

(84) Benannte Vertragsstaaten:
**DE FR IT**

(56) Entgegenhaltungen:
**CH-A-325 796**
**DE-A-2 833 351**
**DE-C-935 154**
**FR-A-410 234**
**FR-A-558 996**
**FR-A-989 919**
**FR-A-1 046 283**
**FR-A-1 270 180**
**FR-A-2 186 209**
**GB-A-622 597**

(73) Patentinhaber: **Poccino- Espresso Import- und Export GmbH, Holter Weg 73, D-4000 Düsseldorf (DE)**

(72) Erfinder: **Fries, Robert, Am Braken 20, D-5602 Wülfrath (DE)**
Erfinder: **Michels, Kurt, Meyerhofstrasse 17a, D-4000 Düsseldorf 13 (DE)**

(74) Vertreter: **Patentanwaltsbüro Cohausz & Florack, Postfach 14 01 20, D-4000 Düsseldorf 1 (DE)**

**Beschreibung**

Die Erfindung betrifft eine Espresso-Kaffeemaschine mit einem insbesondere elektrisch heizbaren, einen abnehmbaren, dicht schließenden Deckel aufweisenden Behälter zur Aufnahme von Wasser, und einem Steigrohr, dessen eines Ende in der Nähe des Bodens des Behälters mündet und dessen anderes Ende zu einem in einem Abstand oberhalb des Behälters angeordneten Behälter zur Aufnahme von gemahlenem Käffee führt, dessen Wasserführung in Abhängigkeit von einem definierten Wasserdampfdruck gesteuert ist, wobei an dem Deckel ein nach außerhalb des Behälters führendes Wasserdampf auslassendes Rohr angeordnet ist, das mit dem Inneren des Behälters über ein außerhalb des Behälters bedienbares Ventil verbunden ist.

Eine solche Espresso-Kaffeemaschine ist aus der französischen Patentschrift 1 270 180 bekannt. Soll diese bekannte Espresso-Kaffeemaschine einen guten Espresso-Kaffee erzeugen, so darf die Temperatur des hochsteigenden Wassers nicht über 96 Grad liegen. In diesem Fall ist aber die Temperatur für den abzuzapfenden Wasserdampf nicht hoch genug. Wird dagegen die Temperatur des Wassers auf die für den Wasserdampf erforderliche Höhe von ca. 120 Grad gebracht, so verbrennt der Kaffee durch das zu heiße Wasser. Es kann mit dieser Maschine somit nicht gleichzeitig Espresso-Kaffee erstellt und Dampf für das Aufschäumen von Milch erzeugt werden.

Aus der FR-A-2 186 209 ist es an sich bekannte die Temperatur des in einer Kaffeemaschine hochsteigenden Wassers durch eine Kühlvorrichtung zu erniedrigen. Hier liegt aber kein Bedarf für das Erzeugen von Dampf vor.

Aufgabe der Erfindung ist es, eine Espresso-Kaffeemaschine der eingangs genannten Art so zu verbessern, daß gleichzeitig Expresso-Kaffee und Dampf für das Aufschäumen von Milch erzeugbar ist.

Diese Aufgabe wird erfindungsgemäß dadurch gelöst, daß das Steigrohr selbst außerhalb des Behälters eine Kühlvorrichtung bildet, die das hochsteigende Wasser auf die erforderliche Temperatur von knapp unter 100°C für Espresso-Kaffee absenkt.

Das Wasser wird auf die für den Dampf erforderliche hohe Temperatur gebracht und zur Erzeugung des Espresso-Kaffees im Steigrohr genügend heruntergekühlt Damit ist es möglich, gleichzeitig Espresso-Kaffee und Dampf für das Aufschäumen von Milch zu erzeugen. Man hat damit denselben Komfort, wie er sonst nur von sehr großen Maschinen der Gastronomie geboten wird.

Eine besonders vorteilhafte Konstruktion wird dadurch erreicht, wenn zur Bildung der Kühlvorrichtung das Steigrohr außerhalb des Wasserbehälters von mehr als die Rohrwandung benötigendem Material, insbesondere Metall umgeben ist. Auch kann hierfür zur Bildung der Kühlvorrichtung das Steigrohr außerhalb des Wasserbehälters von größerer Länge sein als die kürzest erforderliche Länge.

Die Zeichnung zeigt ein Ausführungsbeispiel der Erfindung.

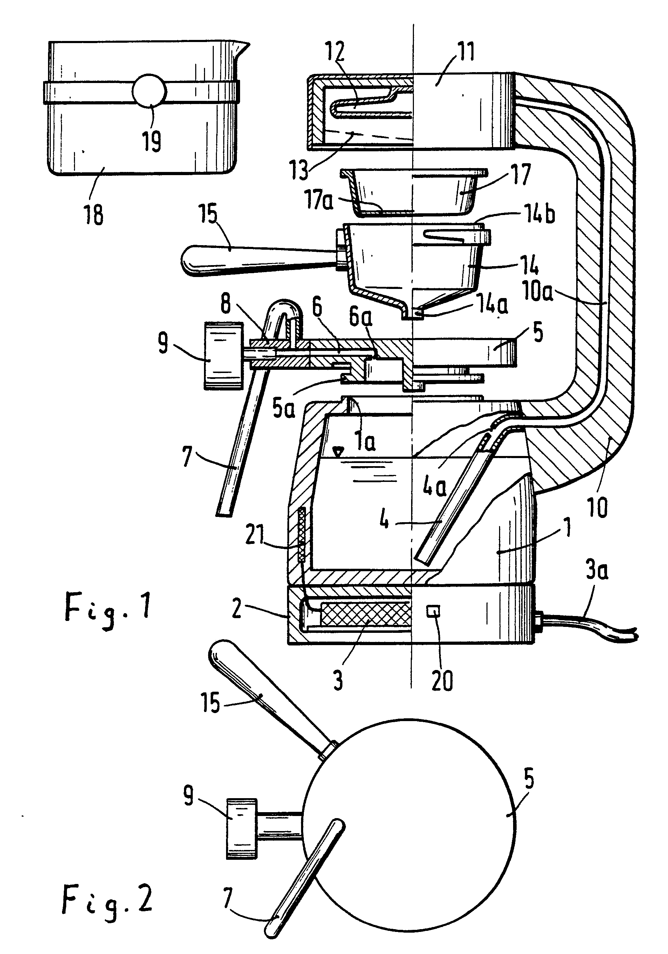

Figur 1    zeigt ein Ausführungsbeispiel der Erfindung, teils in vertikalem Schnitt, teils in Seitenansicht, wobei die voneinander abhebbaren Teile der Maschine in Abgehobenen Zuständen dargestellt sind,

Figur 2    zeigt eine Draufsicht auf den Deckel der Maschine.

Die dargestellte Espresso-Kaffeemaschine weist einen Behälter 1 auf, der bis zu einer gewissen Grenze mit Wasser zu füllen ist. Der Behälter 1 sitzt fest auf einem Untersatz 2, in dem sich ein elektrischer Heizkörper 3 befindet, der mit einer nach außen führenden elektrischen Leitung 3a verbunden ist. Der Behälter 1 ist durch einen Deckel 5 mittels eines Dichtungsrings 5a, der sich auf einen vorspringenden Rand 1a des Behälters 1 legt, abdichtbar. Der Deckel 5 weist einen Bajonettverschluß 5b auf, durch den der auf den Behälter 1 aufgesetzte Deckel 5 in axialer Richtung gegen den Behälter 1 durch Drehen des Deckels 5 um seine Achse mittels eines Handgriffs 15 angezogen werden kann. Im Deckel 5 befindet sich eine Bohrung 6, deren Mündung 6a in das Innere des Behälters 1 so angeordnet ist, daß sie von etwa aus dem Behälter 1 hochspritzendem Wasser nicht erreicht werden kann. Die Bohrung 6 mündet andererseits in das Ende eines Röhrchens 7, dessen anderes Ende in einen Bereich außerhalb des Behälters 1 mündet. Durch ein mittels eines Handgriffs 9 drehbares Ventil 8 kann die Mündung des Röhrchens 7 in die Bohrung 6 geschlossen und mehr oder weniger geöffnet werden.

In dem Behälter 1 befindet sich ein Rohr 4, dessen unteres Ende bis in die Nähe des Bodens des Behälters 1 ragt und dessen anderes Ende in eine Bohrung 10a eines Handgriffs 10 mündet, der am oberen Ende des Behälters 1 befestigt ist. Der Tragarm 10 trägt an seinem oberen Ende einen zylindrischen nach unten offenen Körper 11, der einen an seiner oberen Wandung befestigten Flüssigkeitsverteiler 12 trägt, in den die Bohrung 10a mündet. Die Unterseite des Verteilers 12 hat eine Vielzahl von Bohrungen 12a. Unterhalb desselben sitzt in dem Körper 11 ein Sieb 13.

An die Unterseite des Körpers 11 ist ein Behälter 14 mittels eines Bajonettverschlusses 14b dicht anschließbar. Der Behälter 14 hat einen Handgriff 16, durch den er um seine Achse drehbar und somit der Bajonettverschluß 14b gegen den Körper 11 anziehbar ist. Der Behälter 14 ist unten trichterförmig ausgebildet und mit einer Austrittsöffnung 14a versehen. In den Behälter 14 ist ein Sieb 17 einsetzbar, dessen Boden 16a als Feinsieb ausgebildet ist.

Das Rohr hat eine in den obersten Teil des Innenraums des Behälters 1 mündende Öffnung 4a. Die Öffnung 4a ist derart, daß sie sicherstellt, daß das Wasser durch das Steigrohr 10a derart in Abhängigkeit vom Wasserdampfdruck im Behälter 1 gefördert wird, daß die Temperatur des in das Sieb 17 strömenden Wassers bei 93 bis 96°C liegt, während die Temperatur des im Behälters 1 befindlichen Wassers oberhalb 100°C liegt.

In dem Untersatz 2 ist eine Signallampe 20 vorgesehen, die beim Einschalten des Heizkörpers 3 aufleuchtet und erlischt, sobald ein im Mantel des Behälters 1 angeordneter Thermostat 21 den Heizkörper 3 abschaltet, wenn die Temperatur des Wassers im Behälter 1 die Siedetemperatur um einen vorbestimmten Wert überschreitet.

Die Maschine wird in der Weise betrieben, daß der Behälter 1 bis zu einer unterhalb der Öffnung 4a liegenden Grenze mit Wasser und das Sieb 17 mit gemahlenem Kaffee gefüllt wird. Mittels der Handgriffe 15 und 16 werden der Deckel 5 mit den Behälter 1 und der Behälter 14 mit den Körper 11 dicht verbunden. Auf den Deckel 5 wird ein Behälter zur Aufnahme des zu erzeugenden Espresso-Kaffees gesetzt, beispielsweise eine Kaffeetasse oder ein Behälter 18, der mit einem Handgriff 19 versehen ist, dessen Form den Formen der Handgriffe 15 und 16 entsprechen kann.

## Patentansprüche

1. Espresso-Kaffeemaschine mit einem insbesondere elektrisch heizbaren, einen abnehmbaren, dicht schließenden Deckel (5) aufweisenden Behälter (1) zur Aufnahme von Wasser, und einem Steigrohr (4), dessen eines Ende in der Nähe des Bodens des Behälters mündet und dessen anderes Ende zu einem in einem Abstand oberhalb des Behälters (1) angeordneten Behälter (14) zur Aufnahme von gemahlenem Kaffee führte dessen Wasserführung in Abhängigkeit von einem definierten Wasserdampfdruck gesteuert ist, wobei an dem Deckel (5) ein nach außerhalb des Behälters (1) führendes Wasserdampf auslassendes Rohr (7) angeordnet ist, das mit dem Inneren des Behälters (1) über ein außerhalb des Behälters (1) bedienbares Ventil (8) verbunden ist,
dadurch gekennzeichnet,
daß das Steigrohr (4) selbst außerhalb des Behälters (1) eine Kühlvorrichtung (10, 10a) bildet, die das hochsteigende Wasser auf die erforderliche Temperatur von knapp unter 100°C für Espresso-Kaffee absenkt.
2. Espresso-Kaffeemaschine nach Anspruch 1,
dadurch gekennzeichnet,
daß zur Bildung der Kühlvorrichtung das Steigrohr (4) außerhalb des Wasserbehälters (1) von mehr als die Rohrwandung benötigendem Material, insbesondere Metall umgeben ist.

3. Espresso-Kaffeemaschine nach Anspruch 1 oder 2,
dadurch gekennzeichnet,
daß zur Bildung der Kühlvorrichtung das Steigrohr (4) außerhalb des Wasserbehälters (1) von größerer Länge ist als die kürzest erforderliche Länge.

## Claims

1. Espresso coffee machine with an, especially, electrically heatable vessel (1) having a removable tight-closing lid (5) and intended for receiving water, and with a rising pipe (4), one end of which opens out in the vicinity of the bottom of the vessel and the other end of which leads to a container (14) which is arranged at a distance above the vessel (1) and is intended for receiving ground coffee and the water flow of which is controlled as a function of a specific steam pressure, there being arranged on the lid (5) a pipe (7) which leads outside the vessel (1) and allows steam to escape and which is connected to the interior of the vessel (1) via a valve (8) which can be actuated outside the vessel (1), characterized in that the rising pipe (4) itself forms, outside the vessel (1), a cooling device (10, 10a) which reduces the rising water to the required temperature for espresso coffee of just under 100°C.
2. Espresso coffee machine according to claim 1, characterized in that, to form the cooling device, the rising pipe (4) is surrounded outside the water vessel (1) by more material, especially metal, than is required for the pipe wall.
3. Espresso coffee machine according to claim 1 or 2, characterized in that, to form the cooling device, the rising pipe (4) has outside the water vessel (1) a greater length than the shortest length required.

## Revendications

1. Machine à café express avec un récipient (1) pouvant être chauffé en particulier électriquement, présentant un couvercle (5) amovible fermant de manière étanche, pour recevoir de l'eau, et un tuyau de montée (4) dont une extrémité débouche au voisinage du fond du récipient et dont l'autre extrémité conduit à un récipient (14) pour recevoir du café moulu disposé au-dessus et à distance du récipient (1), dont la conduite de l'eau est commandée en fonction d'une pression de vapeur d'eau définie, un tube (7) de décharge de la vapeur d'eau menant vers l'extérieur du récipient (1) étant prévu sur le couvercle (5), qui est relié à l'intérieur du récipient (1) par l'intermédiaire d'une valve (8) pouvant être manoeuvrée de l'extérieur du récipient (1),
caractérisée en ce que le tuyau de montée (4) forme lui-même à l'extérieur du récipient (1) un dispositif de refroidissement (10, 10a) qui abaisse l'eau qui monte à la température nécessaire pour du café express juste au-dessous de 100°C.

2. Machine à café express selon la revendication 1, caractérisée en ce que, pour former le dispositif de refroidissement, le tuyau de montée (4) est entouré, à l'extérieur du récipient à eau (1) par plus que le matériau nécessaire pour former la paroi du tuyau, en particulier du métal.

3. Machine à café express selon la revendication 1 ou 2, caractérisée en ce que, pour former le dispositif de refroidissement, le tuyau de montée (4) a une plus grande longueur, à l'extérieur du récipient à eau (1), que la plus courte longueur nécessaire.

EP 0 162 305 B1

Fig. 1

Fig. 2

1